Europäisches Patentamt

**European Patent Office**

Office européen des brevets

(11) Publication number: **0 030 100**
**A1**

# (12) EUROPEAN PATENT APPLICATION

(21) Application number: **80304134.2**

(22) Date of filing: **19.11.80**

(51) Int. Cl.³: **C 09 J 5/00**
**E 04 F 15/16**

(30) Priority: **28.11.79 GB 7941105**
**03.06.80 GB 8018155**

(43) Date of publication of application:
**10.06.81 Bulletin 81/23**

(84) Designated Contracting States:
**AT BE CH DE FR IT LI LU NL SE**

(71) Applicant: **ASSOCIATED PAPER INDUSTRIES LIMITED**
**Silk House Park Green**
**Macclesfield Cheshire SK11 7NU(GB)**

(72) Inventor: **Johnson, Michael**
**17 Beechfields**
**Eccleston, Nr. Chorley Lancashire(GB)**

(74) Representative: **Taylor, Phillip Kenneth et al,**
**W.P. THOMPSON & CO. Coopers Building Church Street**
**Liverpool L1 3AB(GB)**

(54) Method of bonding floor coverings and fire retarding assemblies produced thereby.

(57) The invention provides a method of releasably bonding a flexible floor covering to a solid substrate which comprises interposing a single ply of fibrous mat or web between the substrate and the floor covering, at least that face of the single ply adjacent the substrate having been treated with a release agent and bonding the single ply both to the floor covering and to the substrate. The release agent may be applied during or after manufacture of the single ply and before or after bonding thereof to the flexible floor covering but in any event before the single ply is bonded to the substrate. Both faces of the single ply may bear a release agent. The invention also provides a fire retarding assembly comprising a flexible floor covering substrate and interposed therebetween a single ply of fibrous mat or web bonded to both the flexible floor covering and to the substrate, at least that face of the single ply bonded to the floor covering having a release agent thereon and/or therein.

EP 0 030 100 A1

Croydon Printing Company Ltd.

-1-

DESCRIPTION.

"METHOD OF BONDING FLOOR COVERINGS AND FIRE RETARDING
ASSEMBLIES PRODUCED THEREBY".

The present invention relates to a method of bonding flexible floor coverings to solid substrates.

In recent years it has been realized that when floor coverings are loosely fitted to a floor, when a fire occurs combustion can travel under the floor covering and can spread in this way, particularly when the floor covering has a foam underlayer. If the floor covering is bonded to the floor this tendency is markedly reduced or even eliminated.

For many purposes however, it is undesirable for floor coverings to be permanently bonded to the substrate they are intended to cover and it is much more convenient if they are releasably bonded. Even when releasably bonded however, when a floor covering, especially a carpet, is directly bonded to the substrate and is subjected to continuous use, its structure becomes substantially weakened such that, on raising the floor covering from the substrate after use, damage to the floor covering results.

It has been proposed to achieve releasable bonding by interposing a two-ply paper sheet between the floor covering and the substrate to be covered, one ply of the paper being bonded to the substrate and the other ply to the undersurface of the floor covering. When the floor covering requires to be removed from the substrate the paper will separate easily between the plies, one ply remaining on the substrate and the other on the floor covering.

In practice however, it has been found that the application of a bonding agent to the two-ply paper causes buckling and creasing of the paper which makes it impossible for the floor covering to lie flat on the substrate.

It is an object of the present invention to provide a method of releasably bonding a flexible floor covering to a solid substrate which obviates or substantially reduces the above disadvantages.

It has surprisingly been found that if a single ply of fibrous mat or web such as paper or non-woven fabric has a release agent incorporated in and/or on at least one surface thereof, then the bonding agent may be applied without buckling or creasing of the paper or other web or mat even when that bonding agent is applied to an untreated surface thereof and without undue buckling even when using long lengths of web or mat.

Furthermore, it has been surprisingly found that such a fibrous mat or web, when interposed between and bonded to both the substrate and the floor covering, retains its strength during use and, when, after any usage the floor covering is raised, acts as a reinforcing member for the floor covering, either preventing or substantially reducing damage to the floor covering during the raising of the floor covering. This is all the more surprising since the initial strength of the fibrous mat or web is much lower than the initial strength of the floor covering.

According to the present invention therefore, a method is provided of releasably bonding a flexible floor covering to a solid substrate which comprises interposing a single ply of a mat or web of fibres between said substrate and said floor covering and bonding said mat or web of fibres both to said substrate and to said floor covering in which, before bonding, at least that surface of the mat or web of fibres to be bonded to the substrate has a release agent incorporated thereon and/or therein.

The mat or web of fibres is preferably a single ply paper which may be of low quality - i.e. made from scrap materials.

The flexible floor covering may be any flexible floor covering capable of being laid directly onto a substrate. Thus, all types of tufted carpeting which can be laid directly including those with a foam backing may be used in the method of the invention as well as all types of felt or ribbed felt carpets or needleloom carpets.

The bonding agents may be any of those materials used for bonding flexible floor coverings. The release agent may be any such agent which will function in respect of the bonding agent chosen for binding the mat or web to the substrate.

The mat or web of fibres may be, for example, any material in web form that can be treated with release agents whilst being made, or as an after process, and be bonded to a floor and to a floor-covering: Typically this could be a paper of an unbleached type either pure, secondary or mixed fibre having sufficient strength to release from the floor in one piece and being capable of being bonded to the floor without undue buckling and creasing. Non-woven fabrics may also be used as the mat or web of fibres.

The web or mat of fibres is preferably one already treated with the release agent. The bonding can be effected in any order. Thus an adhesive may be applied to the substrate and the web or mat of fibres applied to the coating of adhesive and the free surface of the mat or web of fibres then coated with an appropriate adhesive and the floor covering applied to this coating. Alternatively the mat or web of fibres may first be bonded to the floor covering and then to the substrate.

The web or mat may be bonded to the substrate using for example a water-based floorcovering adhesive such as a lignin based material, (a specific example

—4—

being F. Ball & Co's F65). Cellulose pastes such as those used for bonding wallpaper are also suitable.

The floorcovering may be bonded to the web or mat using for example any conventional carpet laying adhesive, preferably a latex type: a specific example being F.Ball & Co. F3.

Any polymeric material which can be applied to the web or mat, which will form a partial or continuous film over the surface of the web or mat and which has the property of giving the surface of the web or mat a limited bonding strength to the surface of the adhesive chosen for effecting bonding to the substrate can be used as the release agent.

The release agent may be based for example on polyethylene, wax, silicone or a fluorochemical and a specific example is Warwick Chemicals Sunsize 199 a zironium wax complex.

When we refer to limited bonding we mean that the bond between the treated surface of the web or mat and the adhesive bonding the web or mat to the substrate should be such that it is adequate to keep the carpet firmly fixed to the substrate whilst being subjected to all the normal forces and actions that take place in the carpeted areas of the substrate. When the carpet is required to be lifted, then by separating the web or mat from the adhesive at the edge of the carpet, the carpet, together with the web or mat, should be capable of being cleanly removed by peeling the surface of the web or mat away from the adhesive such that the substrate is left with just the layer of adhesive and the carpet and the web or mat are intact as an integral unit.

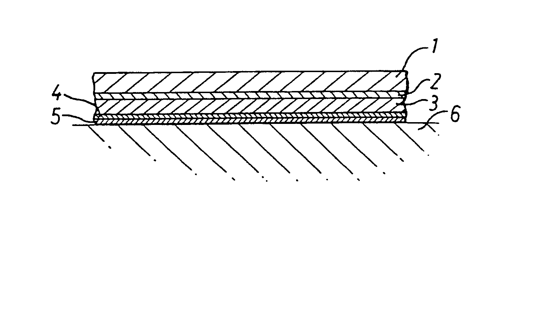

The invention will be further illustrated by reference to the accompanying drawing, which is a diagrammatic sectional view of the assembly of the invention.

Referring to the drawing, a floor covering 1 is bonded by a layer of bonding agent 2 to a single ply 3 of fibrous web or mat. The single ply 3 is in turn bonded to a solid substrate 6 by a layer of bonding agent 5. Between the single ply 3 and the layer of bonding agent 5 is disposed a release agent 4. The effect of the release agent is two-fold. It functions to allow up-lifting of the sub-assembly comprised of the floor covering 1, layer of bonding agent 2 and single ply 3 as a unit leaving only the layer of bonding agent 5 on the substrate. Secondly, by enabling the single ply to remain intact, the single ply is able to act as a reinforcing layer for the floor covering, enabling it to be raised in one place, even after extensive and hard wear of the floor covering. The releasing effect of the release agent is, of course, its normal function, but the second effect of enabling an initially much weaker material to act as a reinforcing layer for the floor covering - an initially much stronger material is very surprising particularly when the destructive forces to which a floor covering is subject over a long period of time are taken into account.

The invention will be further illustrated by reference to the following Examples.

-6-

## Example 1

An unbleached Kraft paper was made on a machine glazed machine at a grammage of 94 g/square metre, and this paper was then coated off machine using a metering bar coating head with a solution of Sunsize 199 sufficient to give a pick-up of 6 $g/m^2$ of wax solids.

The area to be covered was first given an application, using a trowel with a 1/16" by 3/16" notch, of a lignin-based adhesive (F.Ball's F65). The paper was laid on this adhesive in one metre wide strips with the treated surface to the F65 and adhesion ensured by brushing down the paper. The paper surface was then covered, using a 1/16" by 3/16" trowel, with a latex-based adhesive (F. Ball's F3) adhesive. This trial area laid satisfactorily, bonded for one year before lifting and the lifting proved to be perfectly clean, leaving only the layer of F65 adhesive on the floor.

## Example 2

A. An imitation Kraft paper was bonded to a foam-backed carpet. A layer of latex-based adhesive was applied to the foam backing using an applicator notched at 1/16" by 3/16" and the paper bonded to this. When the assembly was dry it was bonded to a wooden surface simulating a floor with the "floor" being coated with a layer of a lignin-based adhesive (F65 Ball & Co.) using a 1/16" by 3/16" notched trowel and the paper side of the first assembly fixed to this.

The whole was then left to thoroughly dry before the adhesion was checked. It was found that upon uplifting, the paper split within itself randomly leaving fibres adhering to both the carpet and the "floor". These fibres were not disposed on the "floor" in a smooth enough layer to achieve successful bonding of another carpet without first removing them from the floor.

B. A Kraft paper made on a Fourdrinier machine was given a surface treatment at the size press with a solution of Sunsize 299 sufficient to give a pickup of substantially 6 $g/m^2$ of wax on each side cf the sheet.

This paper was then bonded to a foam-backed carpet, a layer of latex-based adhesive being applied to the foam backing using an applicator notched at 1/16" by 3/16" and the paper bonded to this. When the assembly was dry it was bonded to a wooden surface simulating a floor with the "floor" being coated with a layer of a lignin-based adhesive using a 1/16" by 3/16" notched trowel and the paper side of the first assembly fixed to this.

The whole was then left to thoroughly dry before the adhesion was checked. On uplifting, the paper peeled from the lignin-based adhesive leaving a layer of water-soluble adhesive on the "floor" and a separated completely integral carpet/paper assembly. The "floor" after uplifting was in a condition such that successful bonding of another carpet could be achieved without any pretreatment of the "floor".

Example 3

A Kraft paper was made on a Fourdrinier machine and given a surface treatment at the size press with a solution of Sunsize 299 sufficient to give a pick up of around two grammes per square metre on each side.

This paper was then bonded to a fibre-cement base simulating a floor with a lignin based adhesive - Laybond lino paste manufactured by Colas Ltd., Slough, England, - using a trowel with notches 1.5 mm deep at 5 mm centres.

A tufted carpet with a foam backing was bonded to the paper with a synthetic resin rubber adhesive - Laybond (13) 71 from Colas Ltd. - using a trowel with notches 1.5 mm x 5 mm.

The whole assembly was left to dry and then tested by test method DIN 54 324 for resistance to castor chair action with a three castor chair base loaded with 90 kg. was rotated 25,000 times over the assembly.

The carpet and paper were still perfectly bonded to the "floor" with no movement having taken place and when the paper and carpet were uplifted they came cleanly away from the floor, leaving only the layer of water soluble lignin based adhesive on the floor.

Example 4.

A Kraft paper was made on a Fourdrinier machine and given a surface treatment at the size press with a solution of Sunsize 299 to give a pick up of around two grammes per square metre on each side of the sheet.

This paper was then bonded to a wooden disc simulating a "floor" with a lignin based adhesive - Corkglue LS330 produced by Messrs. Niederlücke of Borgholzhausen, West Germany - using a trowel with 'V' notches 1.5 mm deep at 5 mm centres.

A woven carpet with a jute backing was then bonded to the paper using a synthetic Rubber Resin Emulsion - Laybond (13) 71 Adhesive produced by Colas Ltd. of Slough, England - the adhesive being applied to the paper with a trowel notched 1.5 mm x 5 mm and the whole assembly left to dry.

The assembled board was then tested under test method DIN 54 324 for resistance to castor chair action where a loaded three castor chair base is rotated over the test piece for a total of 25,000 revolutions. At the end of this test the carpet and paper were still firmly bonded to the floor, however when the paper was lifted at the edge away from the floor the carpet and paper were 'peeled' away from the floor leaving only the layer of water soluble lignin based adhesive on the floor.

Example 5

A Kraft paper was made on a Fourdrinier machine and given a surface treatment at the size press with a solution of Sunsize 299 sufficient to give a pick up of around two grammes per square metre on each side of the sheet.

This paper was then bonded to a wooden disc simulating a floor with a wallpaper paste - Methylan, which is used for heavy wallpapers and manufactured by Henkel of Düsseldorf. The wallpaper paste was made up with water to the manufacturer's instructions and applied to the 'floor' using a brush and the paper laid onto this.

A tufted carpet with synthetic latex foam backing was then bonded to the paper using a synthetic rubber resin emulsion - Laybond (13) 71 - manufactured by Colas Ltd. of Slough, England - with the adhesive applied to the paper using a trowel with 1.5 mm x 5 mm notches and the whole assembly left to dry.

The assembled board was then tested for resistance to castor chair action by test method DIN 54 324 and at the end of the test was still bonded perfectly together; and when the paper was separated at the edge of the carpet from the floor the paper and carpet could be uplifted cleanly leaving only the layer of water soluble wallpaper paste on the floor.

Example 6

An M.G. Unbleached Kraft paper of 94 $g/m^2$ was coated on the glazed side with a solution of Polyethylene emulsion - Ceranine CE Liquid from Sandoz Ltd. - sufficient to give an application 1 $g/m^2$ dry material.

This coated paper was then stuck down with the coated side against a lignin based adhesive (Laybond Lino Paste, produced by Colas Ltd. of Slough, England) which was applied using a trowel notched 1.5 mm deep at 5 mm centres.

A woven carpet with a jute backing was then bonded to the paper using a synthetic Rubber Resin Emulsion - Laybond (13) 71 Adhesive produced by Colas Ltd. of Slough, England - the adhesive being applied to the paper with a trowel notched 1.5 mm x 5 mm and the whole assembly left to dry.

When the paper was lifted at the edge away from the floor the carpet and paper were 'peeled' away from the floor leaving only the layer of water soluble lignin based adhesive on the floor.

Example 7

An M.G. Unbleached Kraft paper of 94 g/m$^2$ was coated on the glazed side with a solution of Fluorochemical - FC 805 from 3M Company - sufficient to give an application of 11 g/m$^2$ of dry material.

This coated paper was then stuck down with the coated side against a lignin based adhesive (Laybond Lino Paste, produced by Colas Ltd., of Slough, England) which was applied using a trowel notched 1.5 mm deep at 5 mm centres.

A tufted carpet with a foam backing was bonded to the paper with a synthetic resin rubber adhesive - Laybond (13) 71 from Colas Ltd. - using a trowel with notches 1.5 mm x 5 mm.

The whole assembly was then left to dry. When the paper and carpet were uplifted they came cleanly away from the floor, leaving only the layer of water soluble lignin based adhesive on the floor.

Example 8.

An M.G. Unbleached Kraft paper of 94 g/m$^2$ was coated on the glazed side with a solution of Silicone - Dow Corning 20 silicone release coating - sufficient to give an application of 7 g/m$^2$ of dry material.

This coated paper was then stuck down with the coated side against a lignin based adhesive (Laybond Lino Paste, manufactured by Colas Ltd., of Slough, England) which was applied using a trowel notched 1.5 mm deep at 5 mm centres.

A woven carpet with a jute backing was then bonded to the paper using a synthetic Rubber Resin Emulsion - Laybond (13) 71 adhesive produced by Colas Ltd. of Slough, England - the adhesive being applied to the paper with a trowel notched 1.5 mm x 5 mm and the whole assembly left to dry.

When the paper was lifted at the edge away from the floor the carpet and paper were 'peeled' away from the floor leaving only the layer of water soluble lignin based adhesive on the floor.

## CLAIMS.

1. A fire retarding assembly comprising a floor covering, a fibrous mat or web and a solid substrate, said floor covering being bonded to one face of said fibrous mat or web by a layer of bonding agent and said fibrous mat or web having its remaining face bonded to said substrate by a layer of bonding agent characterised in that said fibrous mat or web is composed of a single ply and in that a release agent is interposed between said remaining face of said fibrous mat or web and the layer of bonding agent bonding said fibrous mat or web to the substrate.

2. A fire retarding assembly as claimed in claim 1, characterised in that the single ply of fibrous mat or web is a single ply paper.

3. A method of releasably bonding a floor covering to a solid substrate by interposing a fibrous web or mat between said floor covering and said substrate and bonding one face thereof to the floor covering and the other face thereof to the solid substrate characterised in that the fibrous web or mat consists of a single ply of fibrous web or mat and in that before bonding a release agent is interposed between that face of the fibrous web or mat to be bonded to the solid substrate and the layer of bonding agent which bonds the fibrous web or mat to the solid substrate.

4. A method as claimed in claim 3 characterised in that the single ply of fibrous web or mat is a single ply paper.

5. A method as claimed in claim 3 or 4, in which the release agent is a water-based emulsion of polyethylene.

6. A method as claimed in any of claims 3 to 6, in which the release agent is applied to the single ply of fibrous web or mat before it is bonded to the floor covering and solid substrate.

7. A method as claimed in claim 6 in which both faces of the single ply of fibrous mat are treated with a release agent.

8. A method as claimed in any of claims 3 to 7, characterised in that the release agent is one which functions with a lignin based adhesive or a cellulose paste.

0030100

## DOCUMENTS CONSIDERED TO BE RELEVANT

| Category | Citation of document with indication, where appropriate, of relevant passages | Relevant to claim |
|---|---|---|
| | <u>DE - A - 2 718 443</u> (J.F. ADOLFF)<br><br>  * page 8, line 5 to the end; figures 1,2 *<br><br>       -- | 1,3 |
| A | <u>US - A - 3 788 941</u> (JOHN J. KUPITS)<br><br>  * figures; abstract; column 1, line 59 to column 2, line 4 *<br><br>     ------------ | 1-8 |

**CLASSIFICATION OF THE APPLICATION (Int Cl.³)**

C 09 J 5/00
E 04 F 15/16

**TECHNICAL FIELDS SEARCHED (Int. Cl.³)**

C 09 J 5/00
C 09 J 7/04
E 04 F 15/16

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-03-1981 | GIRARD |

EPO Form 1503.1   06.78